# EUROPEAN PATENT APPLICATION

(11) **EP 1 158 549 A1**
(43) Date of publication of application: **28.11.2001**
(21) Application number: 00966531.6
(22) Date of filing: 17.10.2000
(51) Int. Cl.: H01G 4/12

(54) **LAMINATED BODY MANUFACTURING METHOD AND LAMINATED BODY PRESSURIZING DEVICE**

(30) Priority: 18.10.1999 JP 29507999; 04.08.2000 JP 2000237055
(71) Applicant: MATSUSHITA ELECTRIC INDUSTRIAL CO., LTD., Kadoma-shi, Osaka 571-8501 (JP)
(72) Inventor: SAKAGUCHI, Yoshiya, Yawata-shi, Kyoto 614-8332 (JP); KURAMITSU, Hideki, Hirakata-shi, Osaka 573-1121 (JP); NAGAI, Atsuo, Hirakata-shi, Osaka 573-1161 (JP)
(74) Representative: Grünecker, Kinkeldey, Stockmair & Schwanhäusser Anwaltssozietät
(86) International application number: JP0007187
(87) International publication number: WO0129852

(57) **Abstract**

(57) Abstract: A method of manufacturig a laminated body having less. structural defects, comprising the steps of laminating a plulity of sheet-like substances formed by alternately laminating ceramic sheets containing polyethylene and dielectric powder and internal electrodes, positioning the laminated substances between a rigid body and an elastic body such as rubber opposed to each other or between elastic bodies opposed to each other, and pressurizing the laminated substances to form them integrally with each other, whereby, because the elastic body is pressurized along the surface profile of the laminated body, the entire laminated body can be pressurized uniformly to provide higher density and increased inter-layer adhesive strength, the inter-layer adhesive strength can be increased by heating in addition to pressurization, the porosity of the larminated body can be reduced by depressurizing the inside of a pressurizing space, and isotropic pressurization is enabled by surrounding the periphery of the laminated body by a frame body comprising elastic materials and pressurizing the laminated body so as to uniform the shape of the laminated body.

## Description

### Technical Field

The present invention relates to a manufacturing method and pressing force application equipment used in preparing a laminate such as a dielectric sheet with an electrode formed on the surface thereof for use in the manufacturing process of multi-layer ceramic capacitors. Said laminate is fabricated by stacking a plurality of sheet-like materials, each having asperities on the surface thereof, on top of one another in layers, and bonding to one another with pressing force. By the present invention a high density laminate to be realized with a pressing force applied uniformly onto the sheet-like materials even if there are asperities on the surface thereof in part.

### Background Art

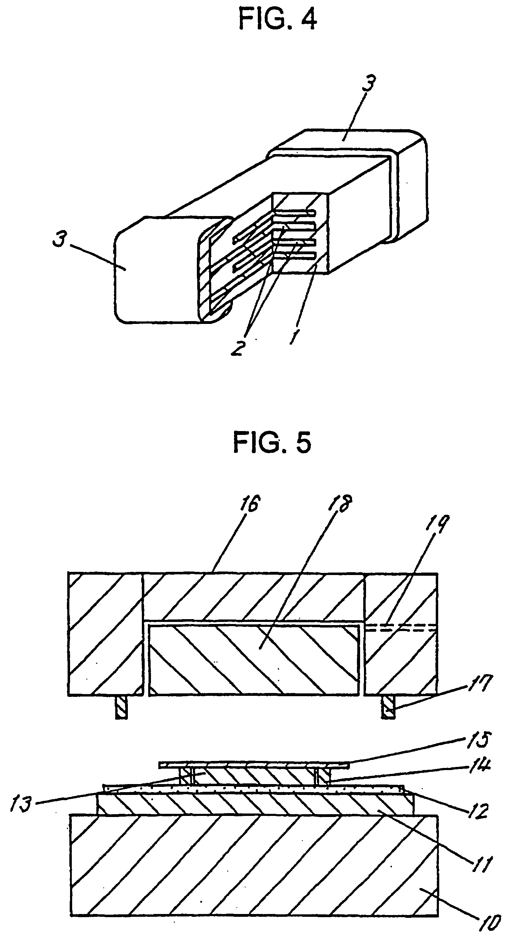

A description is given to a prior art manufacturing method of multi-layer ceramic capacitors, as typical laminates, with reference to drawings. Fig. 4 shows a partially cut out perspective view of a typical multi-layer ceramic capacitor comprising a dielectric layer 1, an internal electrode 2 and an external electrode 3.

First, a first laminate is prepared by stacking green sheets, each of which is produced by a ceramic dielectric material and a vehicle to form a dielectric layer 1, and internal electrodes 2 on top of one another alternately in layers, and a second laminate is obtained by unifying the green sheets and internal electrodes 2 with one another after application of a pressing force in the air via metallic press plates sandwiching the first laminate on the upper and lower surfaces thereof. Then, the second laminate is fired and an external terminal 3 is formed on the exposed end surface of the internal electrode 2, thereby completing the manufacturing process of a multilayer ceramic capacitor.

According to the foregoing method, as the internal electrode 2 is required to form in suitable patterns, and when the number of layers of the green sheets ( referred to as an effective layer, hereafter) sandwiched between the internal electrodes 2 is few as shown in Fig. 4, no problems are created. But as the number of layers increases, the difference in surface level formed by the presence or the existence of the patterned internal electrodes 2 does allow the area, to be applied with a insufficient pressing force, by the conventional pressing force application method of sandwiching the green sheets between the metallic press plates. As a result, the first laminate with a high density area ( where an internal electrode 2 exists ) and a low density area ( where no internal electrode 2 exists ) is formed co-reside with each other, thereby creating a problem of allowing such structural defects as delamination and the like to occur.

### Summary of the Invention

In order to produce a laminate that has less structural defects, the present invention discloses a manufacturing method of laminates comprising a first step of preparing a first laminate by stacking a plurality of sheet-like materials on top of one another in layers and a second step of obtaining a second laminate by sandwiching the first laminate between a rigid body and such an elastic body as rubber and the like located opposite to each other or between a pair of elastic bodies and then applying a pressing force thereto. This manufacturing method allows the laminate to be increased in density and enhanced in the adhesion between layers because a pressing force is applied to the elastic body in accordance with the contour of the first laminate with a resulting uniform application of the pressing force to the entire first laminate.

A manufacturing method of laminates in a first exemplary embodiment of the present invention comprises a first step of preparing a first laminate consisted of a plurality of sheet-like materials, each having asperities on the surface thereof in part, stacked on top of one another in layers and a second step of obtaining a second laminate by sandwiching the first laminate between a rigid body and such an elastic body as rubber and the like located opposite to each other, or between a pair of elastic body and then applying a pressing force thereto, thereby allowing a laminate, which has less structural defects, to be realized.

A manufacturing method of laminates in a second exemplary embodiment of the present invention is the first exemplary embodiment, wherein heat resistant material is used as the elastic body, thereby allowing the adhesion between layers to be intensified since the first laminate can be heated while being applied with a pressing force.

A manufacturing method of laminates in a third exemplary embodiment of the present invention is the first exemplary embodiment, wherein the elastic body is more thick than the first laminate, thereby allowing a pressing force to be applied uniformly regardless of the parallelism of a press plane against the first laminate since the elastic body is deformed with an increasing magnitude of the pressing force and the pressing force is applied so as to make the elastic body cover not only the upper surface but also the side surfaces of the first laminate.

A manufacturing method of laminates in a fourth exemplary embodiment of the present invention is the first exemplary embodiment, wherein the size of an elastic body is larger than the contact area thereof with the first laminate, thereby allowing the elastic body to be deformed in accordance to the contours of the upper and side surfaces of the first laminate when the magnitude of the pressing force application is increased and allowing the first laminate to be uniformly applied with the pressing force.

A manufacturing method of laminates in a fifth exemplary embodiment of the present invention is the first exemplary embodiment, wherein both a green sheet and an internal electrode layer are shaped like the sheet, thereby allowing the structural defects to be prevented from occurring even when the number of layers is increased.

A manufacturing method of laminates in a sixth exemplary embodiment of the present invention is the fifth exemplary embodiment ,wherein the green sheet are consisted of polyolefin and an inorganic powder, thereby allowing a gas inside of the first laminate to be eliminated even when green sheets of a high degree of porosity are used, and allowing the structural defects to be prevented from occurring.

A manufacturing method of laminates in a seventh exemplary embodiment of the present invention is the sixth exemplary embodiment ,wherein the first laminate is held at temperatures of Tₚₒ - 30 °C or higher, while the melting point of polyolefin is Tₚₒ °C, thereby allowing the adhesion between the green sheets to be intensified and allowing the structural defects to be prevented from occurring.

A manufacturing method of laminates in an eighth exemplary embodiment of the present invention is the first exemplary embodiment ,wherein the contact surface between the elastic body and the first laminate is made non-adhesive with the laminate, thereby allowing the laminate to be prevented from deforming by sticking to the elastic body at the time of removal of the laminate.

A manufacturing method of laminates in a ninth exemplary embodiment of the present invention is the first exemplary embodiment ,wherein an elastic plane-like non-adhesive film is inserted between the elastic body and the first laminate, thereby allowing the laminate to be prevented from deforming by sticking to the elastic body.

A manufacturing method of laminates in a tenth exemplary embodiment of the present invention is the ninth exemplary embodiment ,wherein the surface area of the non-adhesive film is made larger than the contact surface thereof with the first laminate, thereby allowing the first laminate to be prevented from sticking to the elastic body with a higher degree of reliability.

A manufacturing method of laminates in an eleventh exemplary embodiment of the present invention is the ninth exemplary embodiment ,wherein the non-adhesive film has heat resistant characteristic, thereby allowing the adhesion between layers to be intensified since the first laminate can be heated while being applied with a pressing force.

A manufacturing method of laminates in a twelfth exemplary embodiment of the present invention is the first exemplary embodiment ,wherein a pressing force is applied to the first laminate on the condition that the side surfaces of the first laminate are covered with a framework, thereby allowing the end part of the first laminate to be prevented from warping.

A manufacturing method of laminates in a thirteenth exemplary embodiment of the present invention is in the ninth exemplary embodiment ,wherein a framework with an inner peripheral configuration larger than the outer peripheral configuration of the first laminate is attached on the supporter, thereby preventing the first laminate from deforming when the first laminate is accommodated inside the framework.

A manufacturing method of laminates in a fourteenth exemplary embodiment of the present invention is the same as in the twelfth exemplary embodiment, wherein an elastic framework is used, thereby allowing the first laminate to be applied with a pressing force uniformly since the elastic framework is deformed according to the contour of the side surface of the first laminate when the pressing force is applied. A manufacturing method of laminates in a fifteenth exemplary embodiment of the present invention is the twelfth exemplary embodiment, wherein the height of the framework is made the same as the thickness of the first laminate or smaller, thereby allowing the top end part of the first laminate to be applied with a pressing force without fail.

A manufacturing method of laminates in a sixteenth exemplary embodiment of the present invention is the twelfth exemplary embodiment, wherein a heat resistant framework is used, thereby allowing the first laminate to be heated while being applied with a pressing force.

A manufacturing method of laminates in a seventeenth exemplary embodiment of the present invention is the first exemplary embodiment, wherein the first laminate is kept in a depressurized atmosphere, thereby allowing a gas in the first laminate to be eliminated easily and allowing the first laminate with less structural defects to be realized.

A manufacturing method of laminates in an eighteenth exemplary embodiment of the present invention is the seventeenth exemplary embodiment ,wherein the pressing force is applied after a gas in the first laminate is eliminated, thereby allowing further few structural defects in the laminates .

A manufacturing method of laminates in a nineteenth exemplary embodiment of the present invention is the fourteenth exemplary embodiment, wherein the pressing force is applied only after the atmospheric pressure surrounding the first laminate is made 80 hPa or less, in order for the gas in the first laminate to be eliminated to an extent where no longer the structural defects are caused, thereby allowing further few structural defects in the laminates.

Pressing force application equipment for laminates in a twentieth exemplary embodiment of the present invention, whereby the manufacturing method of a first laminate is put into practice, has opposing elastic bodies inserted inside of a box-like rigid body of a first pressing force application member and a box-like rigid body of a second pressing force application member, respectively, and while the first pressing force application member and the second pressing force application member being arranged in position so as to have the elastic bodies inserted opposite to each other, at least one of the first or second pressing force application members is made movable, thereby allowing the structural defects of the first laminate to be prevented from occurring since a pressing force can be applied uniformly by deforming the shape of the elastic body along the surface contours of the first laminate.

Pressing force application equipment for laminates in a twenty first exemplary embodiment of the present invention is the twentieth exemplary embodiment ,wherein a frame is provided on each respective periphery of the box-like rigid bodies of the first and second pressing force application members, located opposite to each other, thereby supporting a supporter provided with the first laminate on both surfaces thereof by means of the frame and allowing a plurality of the first laminates to be applied with a pressing force at the same time.

Pressing force application equipment for laminates in a twenty second exemplary embodiment of the present invention is the twenty first exemplary embodiment ,wherein an air outlet is provided in the first and second pressing force application members, respectively, thereby allowing the first laminate to be applied with a pressing force while the first laminate being kept in depressurized atmosphere .

Pressing force application equipment for laminates in a twenty third exemplary embodiment of the present invention is the twentieth exemplary embodiment ,wherein the elastic body is supported by a supporter provided on the inner walls of the rigid body and also is under the state of floating except the supporter, thereby allowing the elastic body to be deformed at the time of pressing force application and allowing the laminate to be prevented from being applied with unnecessary mechanical stress.

### Brief Description of Drawings

Fig. 1 is a cross-sectional view to show the pressing force application step of a first laminate when a pressing force is being applied by means of the pressing force application equipment for laminates in a first exemplary embodiment of the present invention.
Fig. 2 is a cross-sectional view to show the pressing force application step before a pressing force is applied by means of the pressing force application equipment for laminates in the first exemplary embodiment.
Fig. 3 is a cross-sectional view to show the pressing force application step when a pressing force is started to be applied by means of the pressing force application equipment for laminates in the first exemplary embodiment.
Fig. 4 is a partially cut out perspective view of a general type multi-layer ceramic capacitor.
Fig. 5 is a cross-sectional view to show the pressing force application step of the first laminate before a pressing force is applied by means of the pressing force application equipment for laminates in a second exemplary embodiment of the present invention.
Fig. 6 is a cross-sectional view to show the pressing force application step when a pressing force is started to be applied by means of the pressing force application equipment for laminates in the second exemplary embodiment.
Fig. 7 is a cross-sectional view to show the pressing force application step when a pressing force is being applied by means of the pressing force application equipment for laminates in the second exemplary embodiment.
Fig. 8 is a top view of a first pressing force application member 21 in Fig. 5.
Fig. 9 is a cross-sectional view to show the pressing force application step before a pressing force is applied by means of the pressing force application equipment for laminates in a third exemplary embodiment of the present invention.
Fig. 10 is a cross-sectional view to show the pressing force application step when a pressing force is started to be applied by means of the pressing force application equipment for laminates in the third exemplary embodiment.
Fig. 11 is a cross-sectional view to show the pressing force application step when a pressing force is being applied by means of the pressing force application equipment for laminates in the third exemplary embodiment.
Fig. 12 is a cross-sectional view to show the pressing force application step before a pressing force is applied by means of the pressing force application equipment for laminates in a fourth exemplary embodiment of the present invention.
Fig. 13 is a cross-sectional view to show the pressing force application step when a pressing force is started to be applied by means of the pressing force application equipment for laminates in the fourth exemplary embodiment.
Fig. 14 is a cross-sectional view to show the pressing force application step when a pressing force is being applied by means of the pressing force application equipment for laminates in the fourth exemplary embodiment.
Fig. 15 is a cross-sectional view to show the pressing force application step when a pressing force is being applied by means of the pressing force application equipment for laminates in a fifth exemplary embodiment of the present invention.
Fig. 16 is a cross-sectional view to show the pressing force application step when a pressing force is being applied by means of the pressing force application equipment for laminates in a sixth exemplary embodiment of the present invention.
Fig. 17 is a cross-sectional view to show the pressing force application step when a pressing force is started to be applied by means of the pressing force application equipment for laminates in the sixth exemplary embodiment.
Fig. 18 is a cross-sectional view to show the pressing force application step when a pressing force is being applied by means of the pressing force application equipment for laminates in the sixth exemplary embodiment.
Fig. 19 is a cross-sectional view of the pressing force application equipment for laminates in another exemplary embodiment of the present invention.

### Preferred Embodiments for Carrying Out the Invention

Next, a description is given to some of the exemplary embodiments of the present invention with reference drawings.

### (First Exemplary Embodiment)

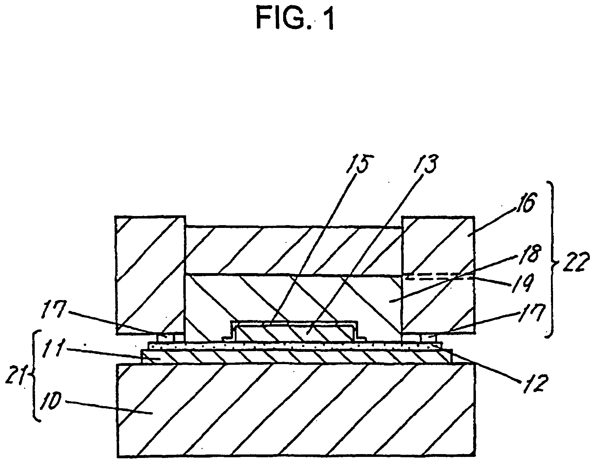

Fig. 1 is a cross-sectional view to show the pressing force application step of a first laminate when a pressing force is being applied by means of the pressing force application equipment for laminates in a first exemplary embodiment of the present invention. The reference numeral 10 is a lower rigid body, 11 is a copper plate, 12 is a stainless steel plate, 13 is a first laminate formed by stacking a green sheet, which is prepared by a ceramic dielectric material and a vehicle and serves as a dielectric layer, and an internal electrode on top of each other in layers, 15 is a polyethylene terephthalate film (referred to as a PET film hereafter), 16 is an upper rigid body , 17 is a frame, 18 is an elastic body and 19 is an air outlet. The lower rigid body 10 and copper plate 11 constitute a first pressing force application member 21 and the upper rigid body 16, frame 17, elastic body 18 and air outlet 19 constitute a second pressing force application member 22.

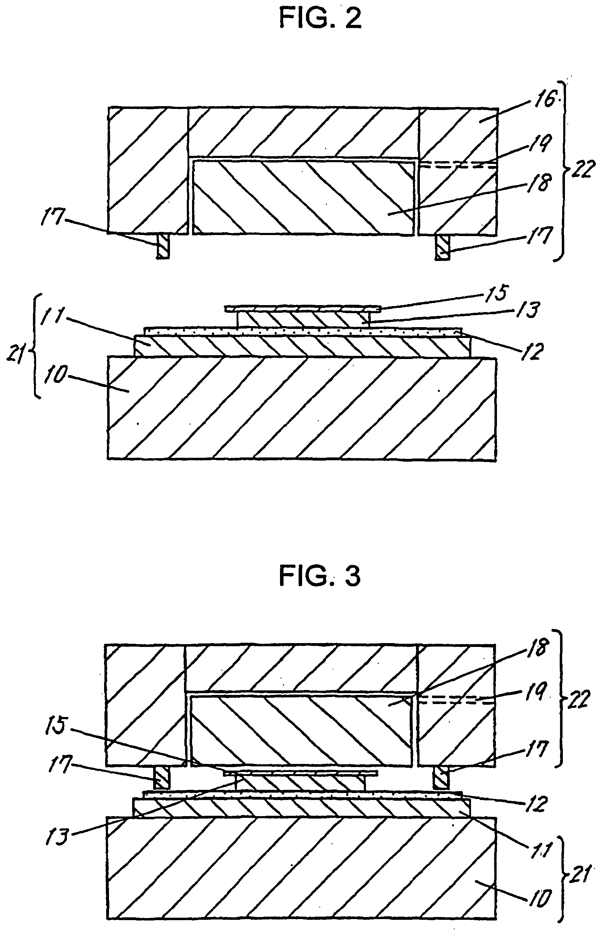

Fig. 2 is a cross-sectional view to show the pressing force application step before a pressing force is applied by means of the pressing force application equipment for laminates in the first exemplary embodiment. Fig. 3 is a cross-sectional view to show the pressing force application step when a pressing force is started to be applied by means of the pressing force application equipment for laminates in the first exemplary embodiment.

Fig. 4 is a partially cut out perspective view of a general type multi-layer ceramic capacitor as an example of the electronic components produced by the use of laminates. In Fig. 4, the reference numeral 1 is a dielectric layer, 2 is an internal electrode and 3 is an external electrode. Next, a description is given to the manufacturing steps of a multi-layer ceramic capacitor produced by the use of a manufacturing method of laminates of the present invention.

First, a green sheet to make a dielectric layer 1 is prepared by dielectric powders with a main constituent of barium titanate and polyethylene (the melting point is about 140 °C) with an average molecular weight of 400,000 or more. The green sheet thus obtained has a very small density with a porosity of 50 % or more. On the other hand, a metallic paste to make an internal electrode 2 is prepared by mixing a nickel powder and a vehicle such as a solvent, a resin, a plasticizer and the like. Then, the internal electrode 2 with a desired pattern is formed on the green sheet by the use of the metallic paste according to a printing method.

Next, a plurality of the green sheets are stacked in layers on a stainless steel plate 12 as a protective layer, and then the green sheets, each with an internal electrode formed thereon, are stacked on top of one another in layers so as to have the internal electrode 2 and green sheets superimposed on one another alternately, and thereafter a plurality of the green sheets are again stacked in layers thereon to make another protective layer, thus obtaining a first laminate 13. Then, while the melting point of polyethylene being Tₚₑ °C, an unheated copper plate 11 is disposed on a lower rigid body 10 heated in advance to temperatures between the temperature of Tₚₑ - 30 °C and the decomposition temperature of polyethylene as shown in Fig. 2,then the first laminate 13 together with the stainless steel plate 12 is disposed on the copper plate 11 and then a PET film 15 is disposed on the upper surface of the first laminate 13.

Next, as shown in Fig. 3, a second pressing force application member 22 is moved downward and press an elastic frame 17 surrounding the lower surface of the pressing force application member 22 onto a first pressing force application member 21, thereby having the first laminate 13 enclosed in the space created between the first pressing force application member 21 and the second pressing force application member 22. Then, said space is depressurized by exhausting air through an air outlet 19 (shown in the drawing by dotted lines) provided in the second pressing force application member 22, thereby allowing the gas inside of the first laminate 13 to be eliminated.

Thereafter, as shown in Fig. 1, an elastic body 18 (a heat resistance temperature of 180 °C or higher) preheated in the second pressing force application member 22 to temperatures between the temperature of Tₚₑ - 30 °C and the decomposition temperature of polyethylene is further moved downward to apply a pressing force to the first laminate 13.

At this time, the pressing force is allowed to be applied to the first laminate 13 uniformly in all directions by covering the upper surface and side surfaces of the first laminate 13 with the elastic body 18 and the lower surface thereof with the stainless steel plate 12. Although asperities are created on the upper surface of the first laminate 13 because of the presence or absence of the internal electrode 2, the pressing force fluctuations are allowed to be prevented from occurring since the pressing force is applied through the elastic body 18, which is deformed in accordance with the foregoing asperities. As a result, regardless of the presence or absence of the internal electrode 2, the first laminate 13 is obtained with a narrow range of density variation.

In addition, when the first laminate 13 is heated via the lower rigid body 10 and elastic body 18, polyethylene in the first laminate 13 is made softer, thereby causing the fusion between the green sheet and the internal electrode 2 and also between the green sheets themselves. As a result, the adhesion between the said layers is intensified, thereby allowing a solidly integrated second laminate to be realized. When the heated temperatures is lower than the temperature of Tₚₑ- 30 °C, the softening extent of polyethylene is insufficient, resulting in poor adhesion. Then, the steps of applying a pressing force and heat treatment come to an end and the second laminate is allowed to cool down slowly.

Afterwards, the second laminate is cut to a desired shape, degreased and fired. By this step of firing, the dielectric layer 1 consisted mainly of barium titanate and the internal electrode 2 consisted mainly of nickel undergo sintering at the same time with resulting production of a sintered body. Then, an external electrode 3 made of copper and the like is formed on the respective end surfaces of the sintered body where the internal electrode 2 is exposed outside, thereby obtaining a multi-layer ceramic capacitor as shown in Fig. 4 . The multi-layer ceramic capacitors produced according to the foregoing method are allowed to reduce the occurrence of such structural defects as delamination and the like in comparison with the multi-layer ceramic capacitors produced according to a prior art method.

When the internal electrode 2 is formed by the use of a metallic paste according to a printing method as in the present exemplary embodiment, an application of heat to the first laminate 13 via the lower rigid body 10 and elastic body 18 may cause a plasticizer in the internal electrode 2 to be released outside excessively, resulting in making the internal electrode 2 hard and brittle, thereby reducing the adhesion between the green sheet and the internal electrode 2 and bringing about structural defects at the time of firing. Therefore, it is preferred that the heating temperatures of the first laminate 13 are controlled to be kept at temperatures, under which no excessive release of the plasticizer takes place. In that regard, it is preferred that the lower rigid body 10 and elastic body 18 are heated in advance to the temperatures ranging from 110 to 170 °C, or more preferably to the temperatures ranging from 145 to 165 °C.

With the present first exemplary embodiment, the stainless steel plate 12 with the first laminate 13 formed thereon is disposed on the rigid body 10 via the copper plate 11. The reason for this arrangement is as follows. Since the lower rigid body 10 is heated in advance to higher temperatures than the temperature, at which polyethylene in the first laminate 13 start to shrink, when the stainless steel plate 12 is disposed directly on the lower rigid body 10, heat is transferred to the first laminate 13 too quickly and the first laminate 13 shrinks before the pressing force is applied thereto, thereby bringing about the danger of causing structural defects. Therefore, by putting a copper plate 11 with an appropriate thickness in place, heat is allowed to be transferred from the lower rigid body 10 and elastic body 18 to the first laminate 13 only after the pressing force is applied thereto. On the other hand, the high thermal conductivity of copper makes it possible for the heat from the lower rigid body 10 to propagate uniformly across the interface to the first laminate 13, thereby allowing the temperature control of the first laminate 13 to be carried out more accurately. Further, besides the copper plate 11, any plate-like rigid plates are allowed to be used as long as the rigid plates are formed of a material that enables the temperature control of the first laminate 13. Moreover, when the lower rigid body 10 is not heated in advance or heated to temperatures lower than the temperature, at which polyethylene starts to shrink, it is not necessary for the copper plate 11 to be used and the stainless steel plate 12 with the first laminate 13 formed thereon is able to dispose directly on the lower rigid body 10.

### (Second Exemplary Embodiment)

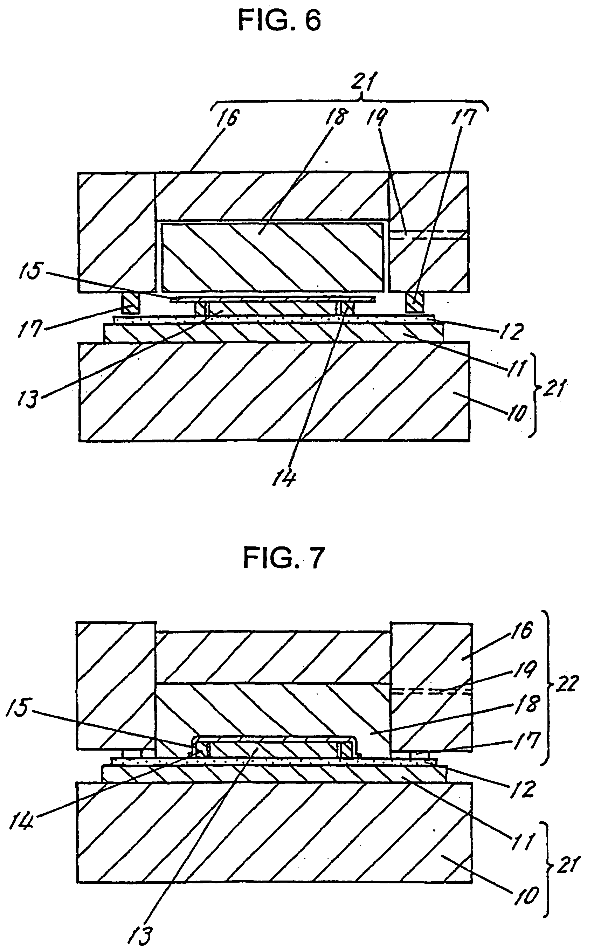

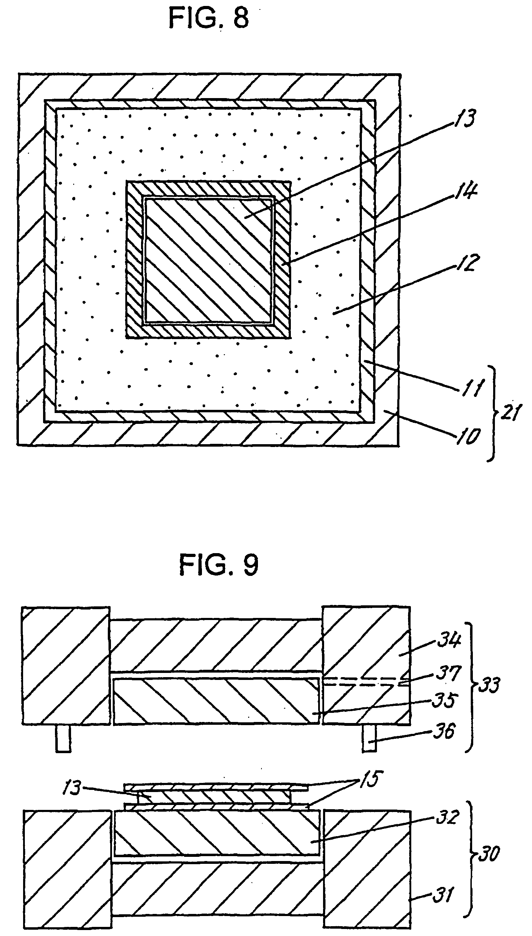

Fig. 5 is a cross-sectional view to show the pressing force application step of a first laminate before a pressing force is applied by means of pressing force application equipment in a second exemplary embodiment of the present invention, Fig. 6 is a cross-sectional view to show the pressing force application step when a pressing force is started to be applied and Fig. 7 is a cross-sectional view to show the pressing force application step when a pressing force is being applied . Fig. 8 is a plan view of a first pressing force application member 21 before a PET film 15 is put in place in the pressing force application step of Fig. 5. The reference numeral 14 is a framework and the other reference numerals refer to the same constituents as in the first exemplary embodiment and, therefore, detailed descriptions thereof are omitted here. What differs from the first exemplary embodiment is in applying a pressing force with such a provision as the elastic framework 14 to cover the side surfaces of a first laminate 13 made beforehand.

First, similarly as in the first exemplary embodiment, the first laminate 13 is formed on a stainless steel plate 12 and then the framework 14 formed of an elastic material is disposed around the first laminate 13 so as to cover the side surfaces thereof.

Then, as shown in Fig. 8, the first laminate 13 together with the stainless steel plate 12 is disposed on a lower rigid body 10 with a copper plate 11 sandwiched there between and, as shown in Fig. 5, the framework 14 is placed around the first laminate 13 and a PET film is disposed to cover the upper surface thereof.

Thereafter, as shown in Fig. 6, a second pressing force application member 22 is lowered in position, thereby pressing down a framework 17 onto the first pressing force application member 21. At this time, the first laminate 13 ends up with a state of being enclosed inside of the space surrounded by the first pressing force application member 21 and second pressing force application member 22. Then, the air inside the space is exhausted through an air outlet 19, resulting in allowing the gas contained in the first laminate 13 to be eliminated.

Next, as shown in Fig. 7, an elastic body 18 is moved further downward to apply a pressing force onto the first laminate 13. During the period of applying a pressing force to the first laminate 13, the air inside the space, where the first laminate 13 exists, is being exhausted so as to prevent a gas from entering into the first laminate 13. By having the first laminate 13 sandwiched between the lower rigid body 10 and the elastic body 18 to apply a pressing force thereto, a second laminate formed in one composite structure is obtained, thereby bringing the steps of pressing force application and heat application to an end and allowing the second laminate to cool down gradually. Afterwards, similarly as in the first exemplary embodiment, the steps of cutting, degreasing, firing and attaching external electrodes 3 are followed, thereby allowing a multi-layer ceramic capacitor, as shown in Fig. 4 .

It is needed to make an arrangement that, similarly as in the first exemplary embodiment, the lower rigid body 10 and elastic body 18 are preheated to the temperatures ranging from 110 °C (Tₚₑ - 30 °C ) to the decomposition temperature of polyethylene in the present second exemplary embodiment, too, and the heat thus generated is transferred to the first laminate 13 as soon as a pressing force is applied thereto. In order to allow the application of a pressing force to the first laminate 13 for certain, it is necessary for the elastic body 18 to have a hardness to some extent. However, when the hardness of the elastic body 18 is too high, it becomes rather difficult for the elastic body 18 to be covered in accordance with the contour of the first laminate 13 at the time of applying a pressing force. Particularly, the foregoing difficulty is multiplied at the upper edge areas of the first laminate 13, resulting in a curvature on the upper surface , thereby bringing about a deformation of the internal electrodes 2 in the upper edge areas and not allowing the first laminate 13 to be used in the manufacture of multi-layer ceramic capacitors with desired characteristics.

Therefore, with the present exemplary embodiment, by having the side surfaces of the first laminate 13 covered with the framework 14, the edge areas of the second laminate are allowed to be prevented from assuming a curvature. As a result, when compared with the first exemplary embodiment, the present exemplary embodiment makes it possible for the first laminates 13 to be produced with uniform configurations. In addition, the height of the framework 14 is made the same as the height of the first laminate 13 in Fig. 5 but, for the purpose of having a pressing force applied to the upper edge areas of the first laminate 13 without fail, it is necessary for the height of the framework 14 to be lower than the height of the first laminate 13. In other words, the height of the framework 14 is preferably to be made so as to prevent the edge areas of the first laminate 13 from causing a curvature.

Conversely, when the framework 14 is higher than the first laminate 13, required pressing force is not applied to the upper edge areas of the first laminate 13, thereby causing such structural defects as delamination and the like. On the other hand, the framework 14 formed of an elastic material with the same elasticity as that of the first laminate 13 allows a desired pressing force to be applied to the first laminate 13. Moreover, the framework 14 is needed to have a higher heat resistance temperature than the temperature, to which the first laminate 13 is heated.

### (Third Exemplary Embodiment)

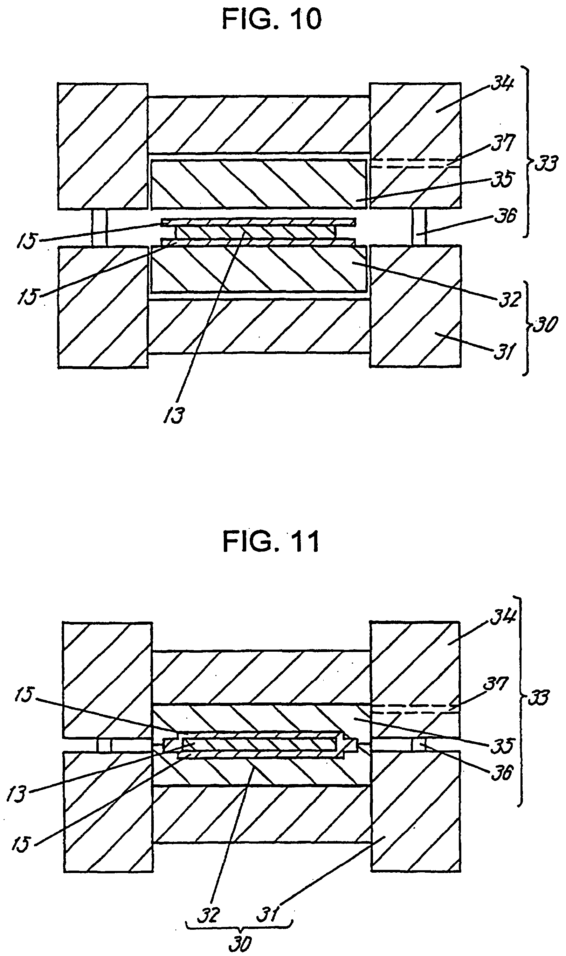

Fig. 9 is a cross-sectional view to show the pressing force application step before a pressing force is applied by means of the pressing force application equipment for laminates in a third exemplary embodiment of the present invention, Fig. 10 is a cross-sectional view to show the pressing force application step when a pressing force is started to be applied and Fig. 11 is a cross-sectional view to show the pressing force application step when a pressing force is being applied . A first pressing force application member 30 comprises a lower rigid body 31 and an elastic body 32, and a second pressing force application member 33 comprises an upper rigid body 34 and an elastic body 35. The reference numeral 36 is a frame, 37 is an air outlet and the other reference numerals refer to the same constituents as in the first exemplary embodiment and, therefore, detailed descriptions thereof are omitted here.

First, a description is given to pressing force application equipment for laminates in the present third exemplary embodiment. A first pressing force application member 30 is formed of a box-like lower rigid body 31, in the concavity of which an elastic body 32 is buried, and a second pressing force application member 33 is formed of a box-like upper rigid body 34 with an air outlet 37 provided therein, in the concavity of which an elastic body 35 is buried, and also an elastic frame 36 disposed on the lower peripheral surface of the upper rigid body 34. The elastic body 32 and elastic body 35 are, respectively, held by supporters provided, in part, on the inner walls of the lower rigid body 31 and upper rigid body 34 and also the foregoing inner walls and the elastic body 32 and 35 are in a floating state against one another at the other areas where no supporters exist, thereby giving a higher degree of freedom of deformation to the elastic bodies 32 and 35 under the pressing force application and preventing an unnecessary stress from being imposed to the first laminate 13.

Naturally, in the same way as in the first exemplary embodiment, the space surrounded by the first pressing force application member 30 and second pressing force application member 33 is depressurized and a gas inside the first laminate 13 is eliminated by being exhausted through the air outlet 37 (shown by dotted lines in the drawing) provided inside of the second pressing force application member 33.

A description is given to the manufacturing steps for multi-layer ceramic capacitors employing the pressing force application equipment for laminates as described in above. First, in the same way as in the first exemplary embodiment, after the first laminate 13 is formed on a stainless steel plate 12, the first laminate 13 is separated from the stainless steel plate 12 and disposed on the elastic body 32 of the pressing force application equipment via a PET film 15 and further another PET film 15 is disposed thereon, as shown in Fig. 9.

Next, as shown in Fig. 10, the first pressing force application member 30 is moved upward to be pressed onto the elastic frame 36 provided on the second pressing force application member 33. At this time, the first laminate 13 is enclosed inside of the space surrounded by the first pressing force application member 30 and second pressing force application member 33. Then, the air inside the space is exhausted through the air outlet 37 (shown by dotted lines in the drawing), thereby depressurizing the inside of the space and having the gas generated from the inside of the first laminate 13 exhausted outside. With the present third exemplary embodiment, too, when the atmospheric pressure inside of the space is about 13 hPa or lower, almost all the gas inside of the first laminate 13 was allowed to be eliminated.

Then, as shown in Fig. 11, the elastic body 35 formed of silicon rubber having a heat resistant temperature of 180 °C or higher is moved downward to start a pressing force application to the upper surface of the first laminate 13. At this time, in contrast to the first and second exemplary embodiments, the elastic bodies 32 and 35 are needed to be kept at temperatures, at which polyethylene does not undergo a deformation, i.e., temperatures of Tₚₑ - 30 °C or lower.

After the pressing force application, the polyethylene inside the first laminate 13 is softened by heating the elastic bodies 32 and 35 to temperatures ranging from Tₚₑ - 30 °C to less than the decomposition temperature of polyethylene, thereby allowing the fusion between the green sheet and the internal electrode 2 and also between the green sheets themselves to take place and realizing a second laminate formed one composite structure.

Further, by applying a pressing force to the first laminate 13 with the entire outer surfaces thereof covered with the elastic bodies 32 and 35, the pressing force is allowed to be applied to the first laminate 13 uniformly in all directions. At this time, in the same way as in the first and second exemplary embodiments, asperities are formed on the surface of the first laminate 13 according to the presence or absence of the internal electrode 2, but variations in the state of the pressing force application of the first laminate 13 are allowed to be prevented from being made by having the elastic bodies 32 and 35 conformed to the contours of the foregoing asperities. In addition, such a provision as preventing a gas from entering into the first laminate 13 is put in place by keeping the space, where the first laminate 13 exists, at a depressurized state, even during the period of the pressing force application.

Accordingly, after the first laminate 13 is made one composite structure by applying a pressing force to the elastic bodies 32 and 35, the steps of pressing force application and heat treatment are brought to an end and the first laminate 13 is left standing to cool down gradually in preparation for the production of a second laminate.

Thereafter, in the same way as in the first exemplary embodiment, the steps of cutting, degreasing, firing and forming the external electrode 3 are performed and a multi-layer ceramic capacitor, as shown in Fig. 4, is obtained.

According to the present third exemplary embodiment, the difference in surface level created on the first laminate 13 by the presence or absence of the internal electrode 2 is more completely eliminated when compared with the first and second exemplary embodiments, because the entire outer surfaces of the first laminate 13 are covered with the elastic bodies 32 and 35 with a subsequent step of pressing force application, thereby allowing the uniform and less porous second laminate to be realized. Furthermore, by employing a framework to cover the side surface of the first laminate 13 as shown in the second exemplary embodiment, the same effect as in the second exemplary embodiment is obtained.

### (Fourth Exemplary Embodiment)

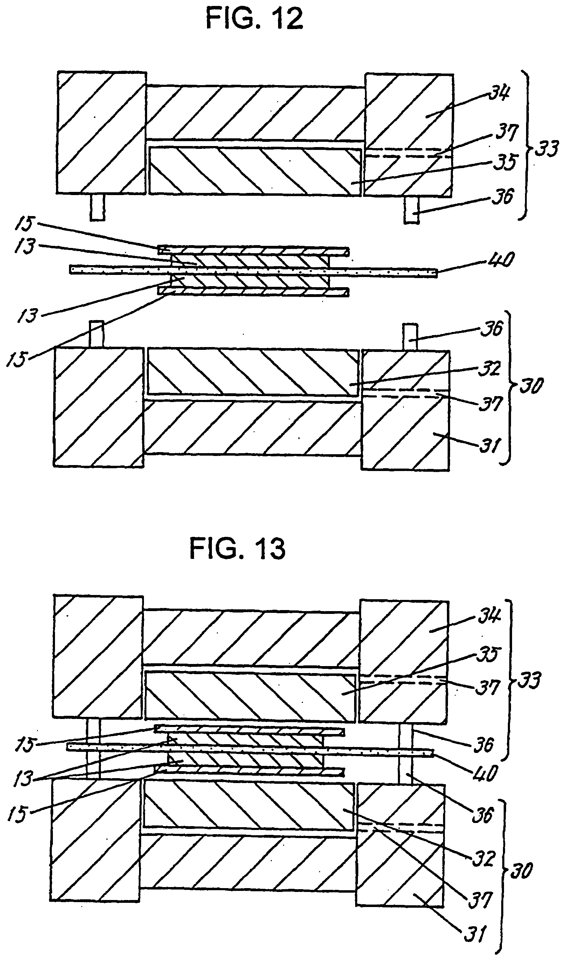

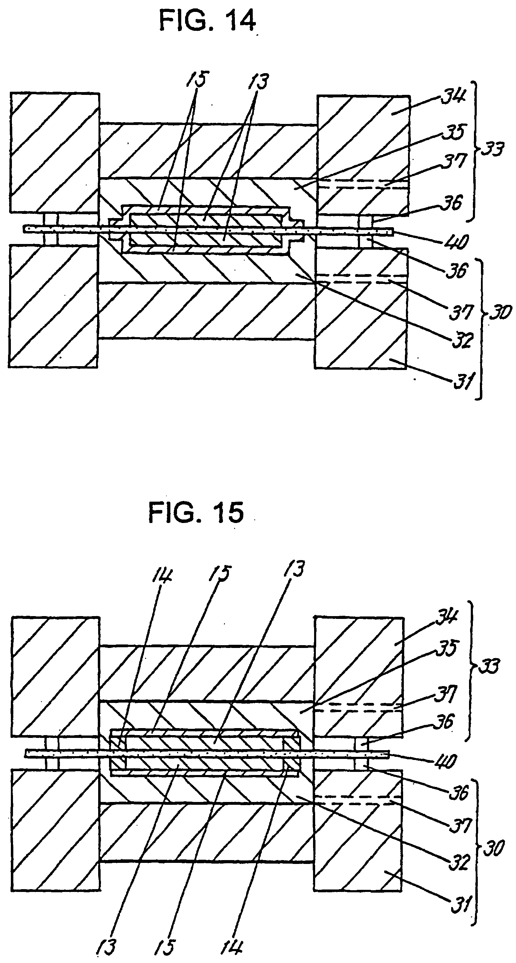

Fig. 12 is a cross-sectional view to show the pressing force application step before a pressing force is applied by means of the pressing force application equipment for laminates in a fourth exemplary embodiment of the present invention, Fig. 13 is a cross-sectional view to show the pressing force application step when a pressing force is started to be applied and Fig. 14 is a cross-sectional view to show the pressing force application step when a pressing force is being applied The reference numeral 40 is a stainless steel plate and the same constituents as in the first to third exemplary embodiments are assigned with the same reference numerals and, therefore, detailed descriptions thereof are omitted here.

What differs from the pressing force application equipment for laminates described in the third exemplary embodiment is in employing a structure with an air outlet 37 provided to both first pressing force application member 30 and second pressing force application member 33 and also with a frame 36 provided to both the first pressing force application member 30 and second pressing force application member 33, thereby allowing a stainless steel plate 40 to be supported by the frame 36.

First, a pair of first laminates 13 are disposed on both surfaces of the stainless steel plate 40 in such a way as opposing to each other with the stainless steel plate 40 sandwiched therebetween. The first laminate 13 is prepared by the same way as in the first exemplary embodiment. Also, in the same manner as in the first exemplary embodiment, a PET film 15 is disposed on the surface of the first laminate 13. Then, the stainless steel plate 40 with the first laminate 13 disposed on both surfaces thereof is fixed between the first pressing force application member 30 and the second pressing force application member 33 by means of supporters (not shown in the drawing). Subsequently, as shown in Fig. 13 , the first pressing force application member 30 and second pressing force application member 33 are moved so as to have the periphery of the stainless steel plate 40 lodged by the frame 36, thereby having the first laminate 13 enclosed in the space surrounded by the first pressing force application member 30 or second pressing force application member 33 and the stainless steel plate 40.

Thereafter, the gas inside of the space is exhausted through the air outlet 37 to depressurize the inside of the space, thereby allowing the gas inside of the first laminate 13 to be sucked out and eliminated. Then, a pressing force is applied to the first laminate 13 by means of the elastic bodies 32 and 35 preheated to temperatures of Tₚₑ - 30 °C or higher as shown in Fig. 14.

At this time, by applying a pressing force to the first laminate 13 with the upper and side surfaces thereof covered by the elastic bodies 32 and 35 and the lower surface by the stainless steel plate 40, the pressing force is allowed to be applied to the first laminate 13 uniformly in all directions. The pressing force can be applied via the elastic bodies 32 and 35 to the first laminate 13 in accordance with the contour of the asperities, which are created on the surface of the first laminate 13 where a pressing force applied because of the presence or absence of the internal electrode 2. As a results, variations in the pressing force are allowed to be prevented from occurring, thereby making it possible for a second laminate to become uniform in density regardless of the presence or absence of the internal electrode 2 by location in the first laminate 13.

By having the first laminate 13 heated through the elastic bodies 32 and 35, the polyethylene inside of the first laminate 13 is softened, thereby allowing the fusion between the green sheet and the internal electrode 2 and also between the green sheets to take place to intensify the adhesion therebetween and realizing the second laminate that is made one composite structure. Then, the steps of pressing force application and heat application are brought to an end and the second laminate is left standing to cool down gradually and thus the second laminate is produced. Afterwards, in the same way as in the first exemplary embodiment, the steps of cutting, degreasing, firing and forming external electrodes 3 are carried out and a multi-layer ceramic capacitor, as shown in Fig. 4 , is obtained.

In addition, in the same way as in the third exemplary embodiment, such a provision is put in place as maintaining the inside of the space, where the first laminate 13 exists, under a depressurized condition while a pressing force being applied to the first laminate 13, in order to prevent a gas from entering into the first laminate 13. Further, in the same way as in the third exemplary embodiment, the elastic bodies 32 and 35 are preheated and the heat thereof is transferred to the first laminate 13 immediately after the pressing force is started to be applied , thereby softening a part of the polyethylene inside of the first laminate 13 and allowing the adhesion between the green sheets themselves and also between the green sheet and the internal electrode 2 to be intensified.

Moreover, in the present fourth exemplary embodiment, two of the first laminate 13 can be subjected to the pressing force application step at the same time. Since the pressing force application step takes about 5 minutes, the ability to allow a plurality of the first laminates 13 to be subjected to a pressing force application step simultaneously can greatly contribute to improve productivity.

When the first laminate 13 is disposed on each of the upper and lower surfaces of the stainless steel plate 40, it is preferred that the first laminates 13 are located opposite to each other with the stainless steel plate 40 sandwiched therebetween. In addition, the first laminates 13 are preferably of an identical shape with each other. When the elastic bodies 32 and 35 are used after being heated, it is preferred that both the elastic bodies 32 and 35 are brought into contact with the first laminate 13 at the same time and detached therefrom simultaneously so as to prevent excessive fluctuations in heating conditions from occurring.

### (Fifth Exemplary Embodiment)

Fig. 15 is a cross-sectional view to show the pressing force application step when a pressing force is being applied by means of the pressing force application equipment for laminates in a fifth exemplary embodiment of the present invention, and the same constituents as in the first to fourth exemplary embodiments are assigned with the same reference numerals and, therefore, detailed descriptions thereof are omitted here.

What the present fifth exemplary embodiment differs from the fourth exemplary embodiment is in applying a pressing force to the first laminate 13 by having a framework 14 provided so as to cover the outer periphery of the first laminate 13 as shown in Fig. 15 . Except for the above, the fifth exemplary embodiment is the same as the fourth exemplary embodiment. In the same way as in the second exemplary embodiment, the present fifth exemplary embodiment also is able to prevent each of the upper edge areas of the first laminate 13 from curving at the time of pressing force application, thereby allowing the second laminates to be produced with a higher degree of uniformity in configuration when compared with the first exemplary embodiment.

### (Sixth Exemplary Embodiment)

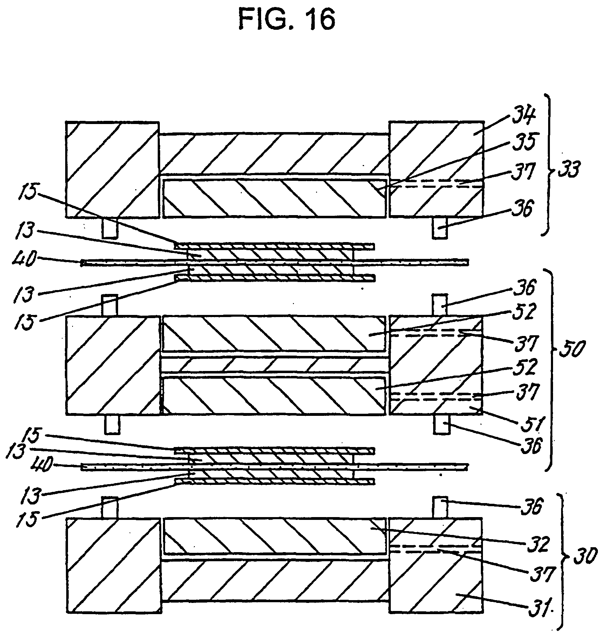

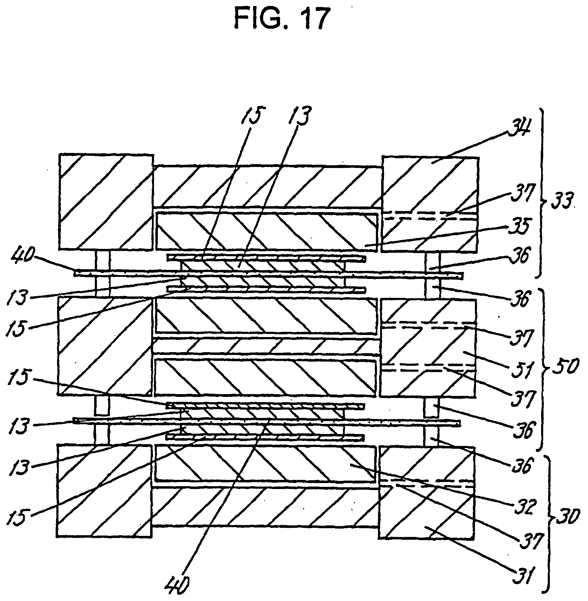

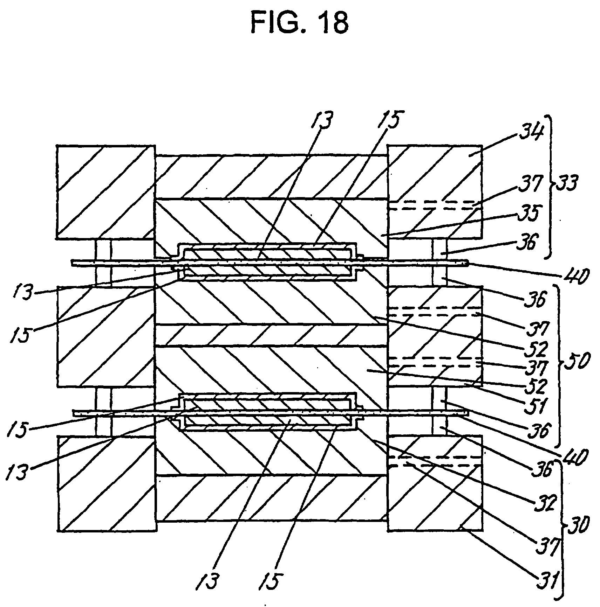

Fig. 16 is a cross-sectional view to show the pressing force application step before a pressing force is applied by means of the pressing force application equipment for laminates in a sixth exemplary embodiment of the present invention.Fig. 17 is a cross-sectional view to show the pressing force application step when a pressing force is started to be applied and Fig. 18 is a cross-sectional view to show the pressing force application step when a pressing force is being applied . A third pressing force application member 50 is composed of a middle rigid body 51 and a pair of elastic bodies 52. The same constituents as in the first to fifth exemplary embodiments are assigned with the same reference numerals and, therefore, detailed descriptions thereof are omitted here.

The third pressing force application member 50 has a concavity on each of the upper and lower surfaces and the elastic body 52 is buried in each respective concavity of above and, in addition, a frame 36 is disposed on the upper and lower peripheral surfaces of the middle rigid body 51, respectively, further with an air outlet 37 provided in each respective concavity. The foregoing frames 36 are located opposite to the frame 36 disposed on the first pressing force application member 30 or the second pressing force application member 33.

What differs from the pressing force application equipment for laminates described in the fourth exemplary embodiment is in having the third pressing force application member 50 in addition to the first pressing force application member 30 and the second pressing force application member 33. In other words, whereas a pressing force can be applied to two of the first laminate 13 at the same time in the fourth exemplary embodiment, a pressing force is allowed to be applied to four of the first laminate 13 simultaneously.

First, in the same way as in the fourth exemplary embodiment, the first laminate 13 is fabricated on both surfaces of the stainless steel plate 40, respectively. Then, in the same way as in the first exemplary embodiment, a PET film 15 is provided to the first laminate 13 so as to cover the upper surface and side surfaces of each respective first laminate 13 at the time of pressing force application.

Next, as shown in Fig. 16 , the stainless steel plate 40 with the first laminate 13 fabricated on both surfaces thereof is inserted between the first pressing force application member 30 and the third pressing force application member 50 and also between the third pressing force application member 50 and the second pressing force application member 33, and fixed by supporters (not shown in the drawing), respectively.

Then, as shown in Fig. 17 , the first pressing force application member 30 and the second pressing force application member 33 are moved vertically so as to have the peripheral areas of the stainless steel plate 40 sandwiched between the frames 36, thereby having the first laminate 13 enclosed in the space surrounded by the first pressing force application member 30, second pressing force application member 33, third pressing force application member 50 and stainless steel plate 40, respectively. Thereafter, each respective space thus formed is depressurized through the air outlet 37, thereby allowing the gas generated from the inside of each respective first laminate 13 to be sucked out and eliminated.

Next, as shown in Fig. 18, a pressing force is applied to the first laminate 13 by means of the elastic body 32, 35 and 52 preheated to temperatures ranging from Tₚₑ - 30 °C to less than the decomposition temperature of polyethylene. At this time, by applying a pressing to the first laminate 13 with the upper and side surfaces thereof covered with the elastic bodies32, 35 and 52 and the lower surface with the stainless steel plate 40, the pressing force is allowed to be applied to the first laminate 13 uniformly in all directions. However, asperities are created on the interfaces between the first laminate 13 and the elastic bodies 32, 35 and 52, which are caused by the presence or absence of the internal electrode 2 in the first laminate 13. Since the pressing force can be applied to the first laminate 13 in accordance with the contour of the asperities via the elastic bodies 32, 35 and 52, which are deformed accordingly, variations in the pressing force application state are allowed to be prevented from occurring, thereby making it possible for a second laminate to become almost uniform in density and excellent in adhesion between layers regardless of the presence or absence of the internal electrode 2.

By heating the first laminate 13 through the elastic bodies 32, 35 and 52, the polyethylene inside of the first laminate 13 is softened, thereby allowing the fusion between the green sheet and the internal electrode 2 and also between the green sheets themselves to take place and realizing the second laminate that is made one composite structure. Afterwards, in the same way as in the first exemplary embodiment, the steps of cutting, degreasing, firing and forming external electrodes 3 are carried out and a multi layer ceramic capacitor, is obtained, as shown in Fig. 4.

In addition, in the same way as in the third exemplary embodiment, such a provision is put in place as maintaining the inside of the space, where the first laminate 13 exists, under a depressurized condition while a pressing force being applied to the first laminate 13 in order to prevent a gas from entering into the first laminate 13.

In the present sixth exemplary embodiment, four pieces of the first laminate 13 are allowed to be subjected to the pressing force application step at the same time and, therefore, productivity can be enhanced further compared with the fourth exemplary embodiment. Also, in the same way as in the fourth exemplary embodiment, the first laminate 13 is fabricated on both surfaces of the stainless steel plate 40 in an identical shape with each other. Further, when the elastic bodies 32, 35 and 52 are used after being heated, it is preferred that all the elastic bodies 32, 35 and 52 are brought into contact with the first laminate 13 at the same time and detached therefrom simultaneously in order to prevent excessive fluctuations in pressing force application conditions from occurring.

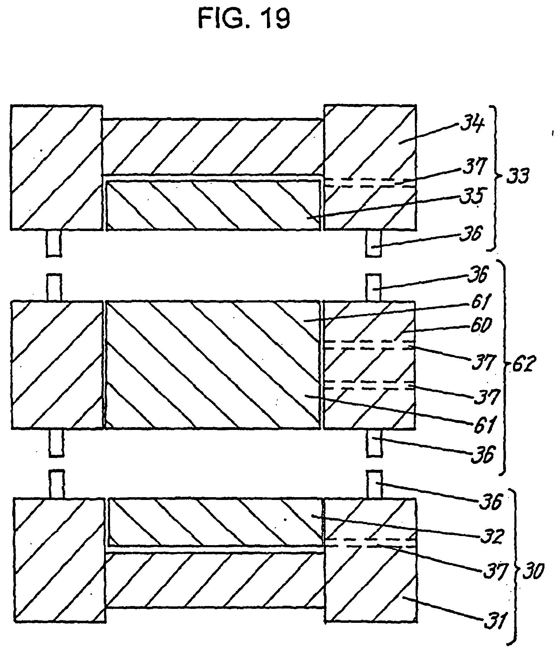

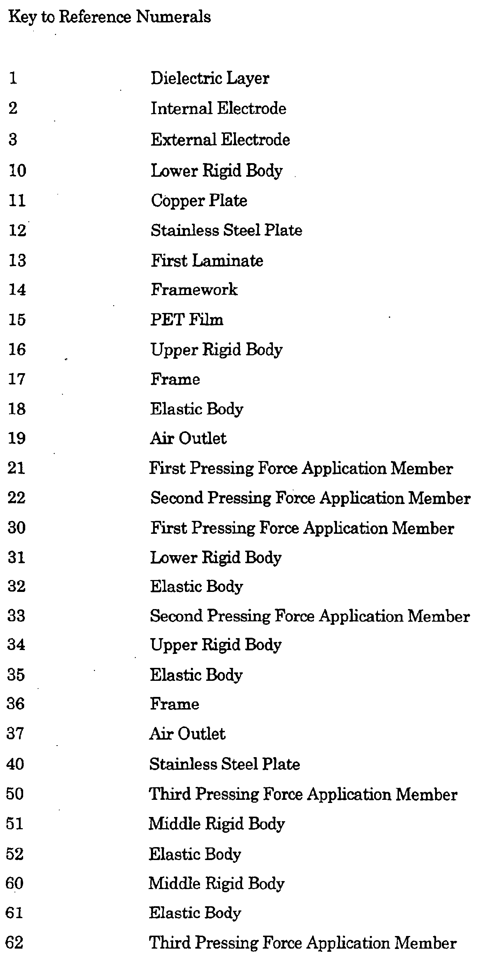

Furthermore, with the present sixth exemplary embodiment, too, the same effect as in the second exemplary embodiment can be obtained by covering the peripheral areas of the respective side surfaces of the first laminate 13 with the framework 14 at the time of pressing force application. Also, in place of the third pressing force application member 50 in the present sixth exemplary embodiment, a third pressing force application member 62 is allowed to be employed, which is structured to have an elastic body 61 inserted inside of a frame-like middle rigid body 60 and to dispose on the upper and lower peripheral surfaces of the middle rigid body 60 with a frame 36 corresponding to the frame 36 disposed on the first pressing force application member 30 and second pressing force application member 33, respectively, as shown in Fig. 19 . In this case, the third pressing force application member 62 consists of a vertically running through hole made in a middle rigid body and an elastic body filled in the through hole.

Furthermore, by having an "n" number ( "n": a natural number) of the third pressing force application member 50 or 62 inserted between the first pressing force application member 30 and the second pressing force application member 33, 2"n" +2 pieces of the first laminate 13 are allowed to be applied with a pressing force at the same time.

Next, the points of the present invention are listed.
(1) Although a laminate is prepared by a green sheet consists of polyethylene, which is a kind of polyolefin, and a dielectric powder consisted of an inorganic material in the foregoing exemplary embodiments, the same effects can be gained with a green sheet consists of super macromolecular polyolefin and an inorganic powder.
   In the case of an increased porosity in green sheets and an increased number of green sheet layers , the effects of the present invention are multiplied. Particularly, when the porosity of green sheets is 30 % or higher and the effective number of layers of the first laminate 13 is 50 or more, excellent effects can be gained.
   In the foregoing exemplary embodiments, a description is given to multi-layer ceramic capacitors but the same effects can be gained with ceramic electronic components fabricated by stacking green sheets and internal electrodes 2 on top of one another in layers such as multi-layer varistors, multi-layer thermisters, multi-layer coils, multi-layer ceramic substrates, ceramic filters and the like.
   In addition, the foregoing effects are demonstrated not only with the ceramic electronic components but also with any devices of one composite structure fabricated by stacking a plurality of sheet-like materials, each of which is provided with asperities on the surface thereof in part.
(2) When the first laminate 13 is prepared by stacking green sheets, each provided with an internal electrode, it is preferred that a green sheet and an internal electrode are provisionally adhered to each other by applying a pressing force so as to prevent displacements of the layers and the like from occurring at a later step of pressing force application. Therefore, the first laminate 13, while being in the process of applying a pressing force thereto, is heated to temperatures ranging from room temperature to a temperature, at which plasticizer in the internal electrode 2 is not released too much, thereby allowing such nonvolatile constituents such as resin, plasticizer and the like in a vehicle contained in the internal electrode 2 to be softened to enhance the adhesion between the internal electrode 2 and the green sheet. However, when the applied heat temperatures are too high, the plasticizer is released excessively, thereby causing the internal electrode 2 to become hard and brittle. As a result, the adhesion between the internal electrode 2 and the green sheet is degraded and such a problem as bringing about structural defects is caused at the time of stacking and firing. Therefore, a careful treatment of the foregoing steps is needed.
(3) It does not matter whether a pressing force is applied to the first laminate 13 under an atmospheric pressure. However, when no gas exists inside the first laminate 13 at the time of pressing force application, one composite structure can be established between layers without fail, thereby preventing the structural defects from occurring. Therefore, it is preferred that a gas inside of the first laminate 13 is eliminated before the step of pressing force application and the first laminate 13 is kept in a depressurized state even during the period of the pressing force application.
   Therefore, the air pressure of the space, where the first laminate 13 exists, is kept lower than the atmospheric pressure both before and while a pressing force is applied to the first laminate 13, preferably kept at 80 hPa or lower and more preferably at 13 hPa or lower, thereby desirably eliminating the gas inside of the first laminate 13 to the extent that does not cause structural defects.
(4) The magnitude of the pressing force applied to the first laminate 13 ranges from 4 MPa to 20 MPa and ranges preferably from 5 MPa to 9 MPa, thereby allowing one composite structure to be established without fail.
(5) In the first, second, fourth, fifth and sixth exemplary embodiments, before a pressing force is applied to the first laminate 13, the lower rigid body 10 and the elastic bodies 18, 32, 35 and 52 are preheated to temperatures ranging from Tₚₑ - 30 °C to less than the decomposition temperature of polyethylene and immediately after the pressing force application the foregoing heat is transferred to the first laminate 13, thereby allowing part of the polyethylene inside of the first laminate 13 to be softened to cause the fusion between the green sheets themselves and also between the green sheet and the internal electrode 2 and desirably to lead to enhancement of the adhesion therebetween. Here, Tpe is the melting point of polyethylene.
   At this time, heating of the first laminate 13 at excessively high temperature results in too much releasing plasticizer inside of the internal electrode 2, thereby making the internal electrode 2 become hard and brittle. As a result, the adhesion between the internal electrode 2 and the green sheet is degraded, resulting in structural defects at the process of firing. Therefore, it is preferred that the lower rigid body 10 and the elastic bodies 18, 32, 35 and 52 are preheated to temperatures ranging from 110 °C to 170 °C and more preferably to temperatures ranging from 145 °C to 165 °C.
   When polyolefin is used in place of polyethylene, it is preferred that the lower rigid body 10 and the elastic bodies 18, 32, 35 and 52 are preheated to temperatures ranging from Tₚₒ - 30 °C to less than the decomposition temperature of polyolefin, where Tₚₒ is the melting point of polyolefin. More specifically, in each respective exemplary embodiment of the foregoing, by preheating the first laminate 13 to temperatures ranging from Tₚₒ - 30 °C to less than the decomposition temperature of polyolefin and making the polyolefin inside of the first laminate 13 soft, the adhesion between the green sheets themselves and also between the green sheet and the internal electrode 2 is allowed to be enhanced.
   However, upon softening all the polyolefin such as polyethylene and the like inside of the first laminate 13 at this time, the desired configuration of the first laminate 13 can no longer be maintained. Therefore, it is necessary for the heating temperatures not to be increased too much. Also, in order for an adverse effect not to be inflicted on the first laminate 13, it is necessary for the lower rigid body 10 and the elastic bodies 18, 32, 35 and 52 to be resistant to temperatures higher than the heating temperature of the first laminate 13. ( In each respective exemplary embodiment of the foregoing, the heat temperature of the first laminate 13 is 180 °C or higher.) Furthermore, in order for the first laminate 13 to be heated uniformly, it is preferred that the respective heating temperatures of the lower rigid body 10 and the elastic bodies 18, 32, 35 and 52 are allowed to be controlled independently.
(6) In each respective exemplary embodiment of the foregoing, the step of degreasing applied to the second laminate is preferably carried out in the order of eliminating the plasticizer and then eliminating the resin after the temperature is raised. The reason is that, when the second laminate is heated at a dash, a new compound is produced from the plasticizer and resin and remains in the second laminate even after the step of degreasing in spite of preventing the structural defects from occurring at the foregoing pressing force application step. At the process of firing, this residual compound is burned and scattered from the second laminate, and such structural defects as delamination and the like are caused, thereby increasing the rate of occurrence of short-circuiting failures. Furthermore, with respect to the steps of degreasing and firing, such a provision as preventing the nickel constituting the internal electrode 2 from becoming excessively oxidized is to be put in place.
(7) As shown in each respective exemplary embodiment of the forgoing, at least the surface of the respective elastic bodies 18, 32, 35 and 52, where come contact with the first laminate 13, is made larger than that of the first laminate 13 and the thickness of said members also is made larger than that of the first laminate 13, thereby allowing the first laminate 13 to be covered on the upper surface and side surfaces thereof so as to be applied a pressing force uniformly.
(8) In each respective exemplary embodiment of the foregoing, when the first laminate 13 is prepared on the stainless steel plates 12 and 40 as supporters, but it does not matter whether other rigid plates are used instead. Further, after the pressing force application, in order for the second laminate to be separated easily from the stainless steel plates 12 and 40, it is preferred that a release layer and the like are provided between the stainless steel plates 12 and 40 and the first laminate 13.
(9) An internal electrode 2 is formed by printing a metallic paste on a green sheet, but the internal electrode 2 can be formed by such a thin film process as a vacuum deposition or a sputtering of metal . In this case, such an effect of enhancing the adhesion between the internal electrode 2 and the green sheet by softening the resin and plasticizer in the internal electrode 2 is not allowed to be achieved . Therefore, in order to enhancethe adhesion between the internal electrode 2 and the green sheet, it is preferred that an adhesive layer consisted of an organic material is applied on the surface of the internal electrode 2. It is necessary for the adhesive layer to be burnt out in the step of firing, thereby causing no adverse effects to the characteristics of the resulting multi layer ceramic capacitors.
(10) Frames 17 and 36 are made of such an elastic body as silicon rubber and the like, thereby allowing no outside air to enter into the enclosed space where the first laminate 13 is contained.
(11)In each respective exemplary embodiment of above, a PET film 15 is inserted between the first laminate 13 and the respective elastic bodies 18, 32, 35 and 52, the size of which is large enough to cover the respective direct contact areas . The adhesion of the PET film 15 is not only weak against the first laminate 13 but also weak against the elastic bodies 18, 32, 35 and 52, thereby allowing the PET film 15 to be peeled/attached readily in the manufacturing steps.
   Also, in order for the first laminate 13, the surface of which has asperities, to be applied with a pressing force via the PET film 15, the thickness of the PET film 15 is made small enough to be deformed in accordance with the surface contour of the first laminate 13 at the pressing force application process, preferably less than 75 µm.
   Furthermore, in order to further reduce the adhesion with the first laminate 13 or with the elastic bodies 18, 32, 35 and 52, it does not matter whether a releasing layer and the like are provided on the surface of the PET film 15. When the heating temperature of the first laminate 13 is higher than the heat resistant temperature of the PET film 15, it is needed to use a plastic film having a heat resistant temperature that is higher than the heating temperature of first laminate 13 and yet achieving the same effects as above.
   However, when the contact surface itself of the respective elastic bodies 18, 32, 35 and 52 with the first laminate 13 has no adhesive properties against the first laminate 13, there is no need of providing such non-adhesive materials as the PET film 15 and the like.
(12) The elastic bodies 18, 32, 35 and 52 are held by the supporters (not shown in drawings) disposed on the inner wall surfaces of the upper rigid bodies 16 and 34, lower rigid body 31 and middle rigid body 51, which together enclose the elastic bodies 18, 32, 35 and 52, and separated therefrom in a floating state at other places than the ones where the supporters are located. Accordingly, at the process of pressing force application, the elastic bodies 18, 32, 35 and 52 are allowed to have a higher degree of freedom in deformation, thereby preventing an unnecessary force from being applied to the first laminate 13;
(13) In order to apply a pressing force to the first laminate 13 via the elastic bodies 18, 32, 35 and 52 in accordance with the surface contour of the first laminate 13, the rubber hardness of the respective elastic bodies 18, 32, 35 and 52 is made less than Hs 80 degrees and preferably less than Hs 75 degrees. Also, when the elastic bodies 18, 32, 35 and 52 are heated, the rubber hardness of the respective elastic bodies 18, 32, 35 and 52 is made to range from Hs 40 degrees to Hs 80 degrees and preferably to range from Hs 45 degrees to Hs 75 degrees in consideration of applying a pressing force to the first laminate 13 uniformly in all the directions and the durability of the respective elastic bodies 18, 32, 35 and 52.
(14) Although the green sheets are formed of polyolefin and an inorganic powder in the foregoing exemplary embodiments, even with a first laminate 13 prepared by stacking green sheets, each consisted formed of another inorganic powder and an organic material, it is preferred that the first laminate 13 is heated to temperatures, at which the organic material is softened, so as to allow the first laminate 13 to maintain a desired configuration and also to allow the adhesion between the green sheets themselves and between the green sheet and the internal electrode 2 to be enhanced. Also, with a first laminate 13 prepared by using plastic sheets, it is preferred that the first laminate 13 is heated to temperatures, at which the organic material is softened, so as to allow the first laminate 13 to maintain a desired configuration and also to allow the adhesion between the green sheets themselves to be enhanced.

### Industrial Applicability

The present invention relates to a manufacturing method of laminates comprising the steps of stacking a plurality of sheet-like materials, each of which is provided with asperities on the surface thereof in part, on top of one another, and sandwiching the layers thus stacked between a rigid body and an elastic body bodies such as rubber and the like, which are located op₁posite to each other, or between opposing elastic bodies and applying a pressing force thereto to make into one composite structure. Thus the entire laminate is applied with a pressing force uniformly by having the elastic bodies in accordance with the surface contour thereof, and the laminate is obtained with a high density and also with the enough adhesive strength between layers. In addition, by heating the laminate while a pressing force being applied thereto, the adhesion between layers is intensified further and by depressurizing inside of the space, in which the pressing force is being applied to the laminate, the porosity of the laminate is further made low. Furthermore, by applying the pressing force to the laminate with the periphery thereof surrounded by a framework formed of an elastic body, the pressing force is allowed to be applied to the laminate uniformly in all the directions, thereby enabling the laminate to a uniform configuration. The manufacturing method of laminates according to the present invention has an excellent effect on producing ceramic electronic components, each fabricated by stacking green sheets and internal electrodes 2 on top of one another, including multi-layer ceramic capacitors to begin with, multi-layer varistors, multi-layer thermisters, multi-layer inductors, multi-layer ceramic substrates, ceramic filters and the like.

## Claims

1. A manufacturingmethod of laminates comprising:
a first step of preparing a first laminate by stacking a plurality of sheet-like materials, on top of one another in layers, each having apserities on a surface thereof in part; and
a second step of obtaining a second laminate by sandwiching said first laminate between a rigid body and an elastic body that are located opposite to each other or between opposing elastic bodies and then by having a pressing force applied thereto.

2. The manufacturing method of laminates according to Claim 1, wherein said elastic bodies have heat resistant characteristic.

3. The manufacturing method of laminates according to Claim 1, wherein said elastic body is more thick than said first laminate.

4. The manufacturing method of laminates according to Claim 1, wherein a size of said elastic bodies are larger than a contact area between said first laminate and said elastic bodies .

5. The manufacturing method of laminates according to Claim 1, wherein a contact area of said elastic body with said first laminate is not adhesive to said first laminate.

6. The manufacturing method of laminates according to Claim 1, wherein a flat elastic non-adhesive film is inserted between said elastic body and said first laminate.

7. The manufacturing method of laminates according to Claim 6, wherein a surface area of said non-adhesive film is made larger than a contact area with said first laminate.

8. The manufacturing method of laminates according to Claim 7, wherein said non-adhesive film has heat resistant characteristic.

9. The manufacturing method of laminates according to Claim 1, wherein a pressing force is applied to said first laminate with a side surface thereof covered with a framework in said second step.

10. The manufacturing method of laminates according to Claim 9, wherein an inner peripheral configuration of said framework is made larger than an outer peripheral configuration of said first laminate.

11. The manufacturing method of laminates according to Claim 9, wherein said framework has elastic characteristic.

12. The manufacturing method of laminates according to Claim 9, wherein a height of said framework is equal to a thickness of said first laminate or lower.

13. The manufacturing method of laminates according to Claim 9, wherein said framework has heat resistant characteristic.

14. The manufacturing method of laminates according to Claim 1, wherein said second step is carried out while said first laminate being maintained in a depressurized atmosphere.

15. The manufacturing method of laminates according to Claim 14, wherein said pressing force application in said second step is carried out after a gas inside said first laminate is eliminated.

16. The manufacturing method of laminates according to Claim 14, wherein said pressing force application in said second step is carried out after an atmospheric pressure around said first laminate is reduced to 80 hPa or lower.

17. The manufacturing method of laminates according to Claim 1, wherein said sheet-like material is formed of a green sheet and an internal electrode layer.

18. The manufacturing method of laminates according to Claim 17, wherein said green sheet is formed of polyolefin and an inorganic powder.

19. The manufacturing method of laminates according to Claim 18, wherein said first laminate is heated to a temperature, at which polyolefin is softened, or higher in said second step.

20. Pressing force application equipment comprising:
a first pressing force application member with an elastic body provided inside of a box-like rigid body ; and a second pressing force application member with an elastic body provided inside of a box-like rigid body , wherein said first and second pressing force application members are arranged so as to have said elastic body located opposite to each other, and also at least one of said first and second pressing force application member is made movable.

21. The pressing force application equipment according to Claim 20, wherein a frame is provided on a periphery of each of said respective rigid bodies of said first and second pressing force application members, said rigid bodies being located opposite to each other.

22. The pressing force application equipment according to Claim 21, wherein an air outlet is provided on each of said respective first and second pressing force application members.

23. The pressing force application equipment according to Claim 21, wherein said elastic body is held by a supporter provided on inner wall surfaces of said rigid body and left under a floating state against said inner wall surfaces at other places.

## Amended claims

### Amended claims under Art. 19.1 PCT

**1.** (amended) A manufacturing method of laminates comprising:
a first step of preparing a first laminate containing an organic substance by stacking a plurality of sheet-like materials, each having asperities on a surface thereof in part; and
a second step of obtaining a second laminate by having said first laminate sandwiched between a rigid body and a preheated elastic body that are located opposite to each other or between opposing preheated elastic bodies and then by having a pressing force applied thereto.
